(19) Europäisches Patentamt
European Patent Office
Office européen des brevets

(11) Veröffentlichungsnummer: **0 018 950**
**B1**

(12) # EUROPÄISCHE PATENTSCHRIFT

(45) Veröffentlichungstag der Patentschrift: **13.07.83**

(51) Int. Cl.³: **C 08 G 59/00**, C 08 G 59/18, C 08 L 63/00

(21) Anmeldenummer: **80810148.9**

(22) Anmeldetag: **01.05.80**

(54) **Einkomponentensysteme auf der Basis kristalliner Epoxidharze und ihre Verwendung.**

(30) Priorität: **08.05.79 CH 4308/79**

(43) Veröffentlichungstag der Anmeldung: **12.11.80 Patentblatt 80/23**

(45) Bekanntmachung des Hinweises auf die Patenterteilung: **13.07.83 Patentblatt 83/28**

(84) Benannte Vertragsstaaten: **CH DE FR GB IT LI NL**

(56) Entgegenhaltungen:
**CH A 413 383**
**FR A 2 309 579**
**GB A 1 169 639**
**US A 3 635 843**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Patentabteilung Postfach**
**CH-4002 Basel (CH)**

(72) Erfinder: **Gutekunst, Ferdinand**
**Oberdorfstrasse 13**
**CH-4125 Riehen (CH)**
Erfinder: **Lehmann, Hans**
**Steinackerstrasse 11**
**CH-4147 Aesch (CH)**
Erfinder: **Schmid, Rolf, Dr.**
**Weihermattweg 18**
**CH-4460 Gelterkinden (CH)**

**EP 0 018 950 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Einkomponentensysteme auf Basis von kristallinen Epoxidharzen und ihre Verwendung

Gegenstand der vorliegenden Erfindung sind lagerstabile, härtbare Einkomponentensysteme auf Basis von kristallinen Epoxidharzen und Härtungskatalysatoren und deren Verwendung zur Herstellung von Formstoffen, Beschichtungen oder Verklebungen.

Bekanntlich weisen Mischungen aus flüssigen Diglycidyläthern auf Basis von Bisphenol A und katalytisch wirkenden Härtungsmitteln für die Verarbeitung nur eine kurze Gebrauchsdauer auf. Zum Beispiel beträgt diese bei einer Mischung aus flüssigem Bisphenol A-diglycidyläther mit einem Epoxidgehalt von 5,4 Aequivalenten/kg und 2-Aethyl-4-methylimidazol als Härtungskatalysator bei Raumtemperatur etwa 24 Stunden, und bei 40 °C weist diese Mischung eine Gebrauchsdauer von nur maximal 8 Stunden auf. Aus der DE-OS 2 405 111 und der DE-OS 2 557 278 ist es ferner bekannt, dass man aus festen Epoxidharzen auf Basis von Bisphenol A oder Bisphenol F, welche im glasartigen Zustand vorliegen und beim Erhitzen erst in den Erweichungszustand übergehen, und Imidazol oder dessen Derivaten legerstabile Einkomponentensysteme in Form von Pulverlacken herstellen kann, die sich zur Herstellung von Beschichtungen auf Metallen nach dem elektrostatischen Sprühverfahren oder dem Wirbelsinterverfahren eignen. Zur Aushärtung dieser Einkomponentensysteme sind aber relativ hohe Temperaturen von durchschnittlich mehr als 200 °C erforderlich, so dass sich diese Einkomponentensysteme zum Beschichten oder Verkleben von nichtmetallischen Werkstoffen, wie zum Beispiel Kunststoffe oder Holz, nicht geeignet sind.

Es wurde nun gefunden, dass man lagerstabile, härtbare Einkomponentensysteme erhält, die vergleichsweise bei tieferen Temperaturen ausgehärtet werden können, wenn man kristalline Epoxidharze mit einem Härtungskatalysator vorzugsweise in der Schmelze intensiv mischt und gegebenenfalls anschliessend das Reaktionsgemisch auf Raumtemperatur abkült und auskristallisieren lässt.

Gegenstand der vorliegenden Erfindung sind somit lagerstabile, in der Wärme in vernetzte Epoxidharze überfühbare Einkomponentensysteme bestehend aus festen Epoxidharzen und Härtungskatalysatoren sowie gegebenenfalls bis zu 30 Gewichts-%, bezogen auf das Epoxidharz-Härtungskatalysator-Gemisch, aus Thermoplasten in Pulverform, dadurch gekennzeichnet, dass es als festes Epoxidharz ein kristallines Epoxidharz mit durchschnittlich mehr als einer Epoxidgruppe im Molekül und einem Schmelzpunkt zwischen 40 bis 150 °C enthält.

Das erfindungsgemässe Einkomponentensystem enthält vorzugsweise ein kristallines Epoxidharz mit einem Schmelzpunkt zwischen 60 und 100° und ferner den Härtungskatalysator in Mengen von 1 bis 12 Gewichts-%, vorzugsweise 2 bis 8 Gewichts-%, bezogen auf das Epoxidharz.

Als geeignete kristalline Epoxidharze für das erfindungsgemässe Einkomponentensystem seien zum Beispiel genannt:

Isophthalsäurediglycidylester, Oxalsäurediglycidylester, Fumarsäurediglycidylester, Bernsteinsäurediglycidylester, Adipinsäurediglycidylester, Sebazinsäurediglycidylester, Trimesinsäuretriglycidylester, Pyromellitsäuretetraglycidylester, 3-Glycidyloxybenzoesäureglycidylester, 1,3-Diglycidyl-5,5-pentamethylenhydantoin, 1,1-Methylen-bis-(3-glycidyl-5,5-dimethylhydantoin), Triglycidylisocyanurat, Triglycidylcyanurat, Hydrochinondiglycidyläther, Isopropoxidiglycidylcyanurat, Diglycidyldiacetyl-p-phenylendiamin, Diglycidyldiacetylbenzidin, Diglycidyl-2,4-diacetyldiaminotoluol, Diglycidylmaleinsäuredianilid, Adipinsäurediglycidylanilid und Sebazinsäurediglycidylanilid.

Ferner eignen sich auch solche kristallinen Epoxidharze, die durch Adduktbildung aus einem sauren aliphatischen Polyester, worin die Summe der C-Atome in der aliphatischen Polyesterkette mindestens 8 beträgt, und einem Epoxidharz erhalten werden. Solche kristallinen epoxidgruppenhaltigen Addukte sind zum Beispiel in der DE-OS 1 720 427 und der DE-OS 1 900 789 beschrieben. Diese kristallinen epoxidgruppenhaltigen Addukte werden vorzugsweise in Mischung mit anderen kristallinen, nicht mit einem Polyester vorverlängerten Epoxidharzen eingesetzt, wobei der Anteil des epoxidgruppenhaltigen Addukts vorzugsweise bis zu 30 Gewichts-%, bezogen auf die gesamte Menge Epoxidharz, beträgt.

Als Härtungskatalysatoren eignen sich zum Beispiel Imidazol und dessen durch Alkyl, Alkenyl, Phenyl oder Benzyl substituierte Derivate, wie 1-Methylimidazol, 2-Aethyl-4-methylimidazol, 2-Vinylimidazol, 2-Phenylimidazol oder 2-Phenyl-4-methylimidazol, 1-(3-Aminopropyl)-imidazol, oder tertiäre Amine, wie Diäthylaminopropylamin, Dimethylaminopropylamin, Diäthylaminoäthylamin, Dimethylaminobenzylamin oder 1,6-Bis-(dimethylamino)-hexan, sowie Additionsprodukte aus Dimethylaminoalkylaminen und Glycidyläthern aliphatischer Alkohole oder von Phenolen. Solche Additionsprodukte entsprechen vorzugsweise der Formel I

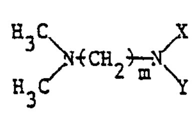

(I)

worin m für eine Zahl von 3 bis 10 steht,

X eine Gruppierung der Formel

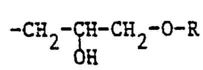

bedeutet, worin R ein Alkyl mit 4 bis 10 C-Atomen oder ein unsubstituiertes oder durch Chlor, Brom, Alkyl oder Alkoxy mit je 1 bis 3 C-Atomen substituiertes Phenyl bedeutet, und Y ein wasserstoffatom bedeutet oder die Bedeutung von X hat. Additionsprodukte der oben angegebenen Formel sind zum Beispiel in der GB-PS 1 169 990 und in der US-PS 3 332 997 beschrieben.

Ferner können als Härtungskatalysatoren beispielsweise auch Verbindungen der Formel

$$(CH_3)_2N—(CH_2)_3—NH(CH_2)_3—NH_2,$$

$$(CH_3)_2N(CH_2)_3NH(CH_2)_2—CN \quad \text{oder}$$

$$(CH_3)_2N—(CH_2)_3—N(CH_2CH_2CN)_2$$

eingesetzt werden, sowie Piperazin, Dicyandiamid, die bekannten $BF_3$-Komplexverbindungen, wie zum Beispiel Bortrifluoxid-monoäthylaminkomplex, Addukte aus 1 Mol 1-(3-Aminopropyl)-imidazol und 1 oder 2 Mol Glycidyläther aliphatischer Alkohole oder von Phenolen oder Addukte aus 1 Mol 2-Aethyl-4-methylimidazol, 2-Methylimidazol oder Imidazol und 1 Mol Glycidyläther aliphatischer Alkohole oder eines Phenols. Diese Addukte können ebenfalls nach dem in der GB-PS 1 169 990 beschriebenen Verfahren hergestellt werden.

Vorzugsweise verwendet man als Härtungskatalysator die Additionsprodukte der Formel I oder die Addukte aus 1 Mol 2-Aethyl-4-methylimidazol, 2-Methylimidazol oder Imidazol und 1 Mol Glycidyläther aliphatischer Alkohole oder eines Phenols. Insbesondere verwendet man die Additionsprodukte der Formel I, worin m für 3 steht und X, Y und R die dort angegebene Bedeutung haben.

Vorzugsweise enthält das erfindungsgemässe Einkomponentensystem den Härtungskatalysator im Kristallinen Epoxidharz eingeschmolzen. Solche Einkomponentensystem werden in einfacher Weise dadurch hergestellt, indem man das kristalline Epoxidharz in der Schmelze mit dem Härtungskatalysator intensiv mischt und anschliessend die Schmelze auf Raumtemperatur abkühlen und auskristallisieren lässt. Auf diese Weise wird eine sehr homogene Verteilung des Härtungskatalysators im kristallinen Epoxidharz erhalten.

Zur Herstellung von zum Beispiel Klebebändern oder Prepregs aus den erfindungsgemässen Einkomponentensystemen ist es zweckmässig, die entsprechenden Gewebe oder Faservliese mit der Schmelze der Einkomponentensysteme zu tränken oder zu beschichten. Auf die gleiche Art und Weise können auch zu verklebende Substrate, wie Metalle, Keramik, Glas, Kunststoffe, Holz etc., mit der Schmelze des Einkomponentensystems vorbehandelt werden.

Die erfindungsgemässen kristallinen Einkomponentensysteme eignen sich auch zur Herstellung von Prepregs durch Aufbringen des Kristallpulvers auf Vliese aus zum Beispiel Nylon-, Polyester- oder Glasfasern, und anschliessendes Einsintern, Einwalzen oder Einpressen.

Die kristallinen Einkomponentensysteme können auch in üblicher Weise zu einem Granulat, zu Tabletten, Stäbchen etc. Verarbeitet werden.

Falls der verwendete Härtungskatalysator in Form eines Pulvers vorliegt, können die erfindungsgemässen Einkomponentensysteme auch hergestellt werden, indem man das kristalline Epoxidharz mit dem entsprechenden Härtungskatalysator fein abreibt bzw. intensiv mischt. Solche Einkomponentensysteme sind ebenfalls sehr gut lagerstabil, jedoch erreicht man auf diese Weise eine weniger homogene Verteilung des Härtungskatalysators im Epoxidharz im vergleich zu den Einkomponentensystemen, die durch Mischen des Härtungskatalysators mit den geschmolzenen Epoxidharzen erhalten werden.

Die erfindungsgemässen Einkomponentensysteme können mit den üblichen, auf dem Epoxidharzgebiet gebräuchlichen Zusatzmitteln, wie Füllstoffe, Plastifizierungsmitteln oder Pigmenten, vermischt werden, wobei diese Zusätze feste Substanzen, vorzugsweise kristalline, sein müssen. Insbesondere bei der Verwendung der erfindungsgemässen Einkomponentensysteme als Klebemittel setzt man diesen vorzugsweise Thermoplasten in Form von Pulvern zu. Der Anteil solcher thermoplastischer Pulver kann bis zu 30 Gewichts-%, bezogen auf das Epoxidharz-Katalysator-Gemisch, betragen. Vorzugsweise enthalten die Klebemittel 5 bis 20 Gewichts-% eines thermoplastischen Pulvers. Als Thermoplasten verwendet man insbesondere ABS-Pfropfpolymere oder Copolymere aus Aethylen, Acrylsäure und/oder Acrylsäureestern. Als Plastifizierungsmittel bzw. Flexibilisator können den Einkomponentensystemen vorteilhaft die kristallinen, langkettigen Polyester zugesetzt werden, die zum Beispiel im GB-Patent 1 164 584 oder auch in « Die Angewandte Makromolekulare Chemie », 1973, Seite 349-412, beschrieben sind.

Die erfindungsgemässen Einkomponentensysteme eignen sich zum Verkleben der verschiedenartigsten Werkstoffe, wie Metalle, Keramik, Glas, Holz und Kunststoffe, insbesondere auch solche mit verhältnismässig niedrigen Erweichungspunkten, wie ABS-Polymerisate, Polyäthylen und PVC.

Grundsätzlich können die erfindungsgemässen Finkomponentensysteme auch als Giess- oder Laminierharze, als Pressmassen oder als Sinterpulver für die Pulverbeschichtung nach dem Wirbelsinterverfahren eingesetzt werden.

Wie eingangs erwähnt, zeichnen sich die erfindungsgemässen Einkomponentensysteme durch lange Lagerzeiten aus und weisen ferner den Vorteil auf, dass beim Lagern keine Entmischungen eintreten

können. Die kristallinen Einkomponentensysteme sind ferner durch einen scharfen Schmelzpunkt gekennzeichnet, weisen oberhalb des Schmelzpunktes niedrige Viskositäten auf und zeigen eine gute Benetzung mit metallischen und nichtmetallischen Werkstoffen.

Mit den erfindungsgemässen Einkomponentensystemen können ausserdem bei relativ niedrigen Temperaturen rasche Härtungen erzielt werden.

In den folgenden Beispielen stehen Teile für Gewichtsteile ; Prozente bedeuten, falls nicht näher angegeben, Gewichtsprozente.

Herstellung von epoxidgruppenhaltigen Addukten auf Basis von Polyesterdicarbonsäuren

A. Herstellung der Polyesterdicarbonsäure

Polyesterdicarbonsäure 1

1 414 g Sebazinsäure und 750 g 1,6-Hexandiol (Molverhältnis 11 : 10) wurden unter Stickstoffatmosphäre auf 135 °C erwärmt und innerhalb 7 Stunden wurde unter Rühren die Temperatur weiter auf 228 °C erhöht, wobei das durch Polykondensation entstehende Wasser laufend abdestilliert wurde. Anschliessend wurde bei 230 °C unter $2 \times 10^3$ Pa die restliche Feuchtigkeit entfernt. Der erhaltene saure Polyester ist ein bei Raumtemperatur kristallines Produkt mit einem Schmelzpunkt von 54 °C und einem Säureäquivalentgewicht von 1 550 (Theorie : 1 521).

Polyesterdicarbonsäure 2

1 899,3 g Adipinsäure und 1 475 g 1,6-Hexandiol (Molverhältnis 26 : 25) wurden unter Stickstoff auf 136 °C erwärmt und innerhalb 9 Stunden wurde unter Rühren die Temperatur weiter auf 170 °C erhöht, wobei das durch Polykondensation entstehende Wasser laufend abdestilliert wurde. Anschliessend wurde bei 175 °C unter $2{,}4 \times 10^3$ Pa die restliche Feuchtigkeit entfernt. Der erhaltene saure Polyester ist ein bei Raumtemperatur kristallines Produkt, mit einem Schmelzpunkt von 55 °C und einem Säureäquivalentgewicht von 1 665 (Theorie : 2 924).

Polyesterdicarbonsäure 3

708 g Bernsteinsäure wurden mit 509,6 g 1,4-Butandiol (Molverhältnis 11 : 10) unter Stickstoff während 5 Stunden auf 200 °C erwärmt. Das durch Veresterungsreaktion gebildete Wasser wurde laufend abdestilliert. Die letzten Spuren von Feuchtigkeit wurden im Vakuum ($1{,}8 \times 10^3$ Pa) bei 210 °C während 1 1/2 Stunden entfernt. Der gebildete saure Polyester ist ein bei raumtemperatur kristallines Produkt mit mehreren Schmelzpeaks bei 64°, 88°, 100° und 109 °C und einem Saureäquivalentgewicht von 984 (Theorie : 924).

Polyesterdicarbonsäure 4

2 191,5 g Adipinsäure, 1 720 g 1,6-Hexandiol (Molverhältnis 35 : 34), 11,7 g (0,3 Gew.-%) eines Katalysators der Formel

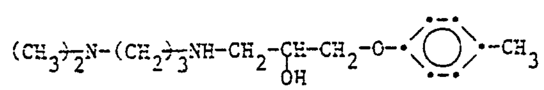

und 11,7 g 3,5-Di-tert.-butylbenzylphosphonsäure-di-n-octadecylester als Stabilisator wurden unter Stickstoff-Atmosphäre auf 160 °C erwärmt und innerhalb 6 Stunden wurden 455 g Wasser laufend abdestilliert. Anschliessend wurde bei 185 °C unter $2 \times 10^3$ Pa die restliche Feuchtigkeit entfernt. Der erhaltene saure Polyester ist ein bei Raumtemperatur kristallines Produkt mit einem Schmelzpunkt von 52 °C und einem Säureäquivalentgewicht von 2 678 (Theorie : 3 951).

Polyesterdicarbonsäure 5

295 g Bernsteinsäure wurden mit 180,2 g 1,4-Butandiol (Molverhältnis 5 : 4) unter Stickstoff während 5 Stunden auf 170 °C erwärmt. Das durch Veresterungsreaktion gebildete wasser wurde laufend abdestilliert. Die letzten Spuren von Feuchtigkeit wurden im Vakuum ($2 \times 10^3$ Pa) bei 160 °C während 1 1/4 Stunden entfernt. Der gebildete saure polyester ist ein bei Raumtemperatur kristallines Produkt mit mehreren Schmelzpeaks bei 72, 81 und 95 °C und einem Säureäquivalentgewicht von 396 (Theorie : 403).

B. Herstellung der epoxigdruppenhaltigen Addukte

Addukt I

155 g Polyesterdicarbonsäure 1 und 28,6 g Terephthalsäurediglycidylester (Schmelzpunkt 102 °C)

mit einem Epoxidgehalt von 6,9 Aequivalenten/kg (entsprechend einem Molverhältnis von 1 : 2) wurden unter $N_2$-Atmosphäre während 2 Stunden bei 140 °C unter Rühren reagieren gelassen. Das erhaltene Addukt I ist ein kristallines Produkt mit einem Schmelzpunkt von 82 °C und einem Epoxidäquivalentgewicht von 1 240.

Addukt II

333 g Polyesterdicarbonsäure 2 und 61 g Isophthalsäurediglycidylester (Schmelzpunkt = 67 °C) mit einem Epoxidgehalt von 6,8 Aequivalenten/kg (entsprechend einem Molverhältnis von 1 : 2) wurden unter Stickstoffatmosphäre während 2 Stunden bei 160 °C unter Rühren reagieren gelassen. Das erhaltene Addukt II ist bei Raumtemperatur kristallin mit einem Schmelzpunkt von 51 °C und einem Epoxidäquivalentgewicht von 2 040.

Addukt III

181 g Polyesterdicarbonsäure 2 und 58 g Terephthalsäurediglycidylester (Schmelzpunkt = 102 °C) mit einem Epoxidgehalt von 6,9 Aequivalenten/kg (entsprechend einem Molverhältnis von 1 : 4) wurden unter $N_2$ während 2 Stunden bei 160 °C unter Rühren reagieren gelassen. Das erhaltene Addukt III ist ein bei Raumtemperatur kristallines Epoxidharz mit einem Schmelzpunkt von 46 °C und einem Epoxidäquivalentgewicht von 962.

Addukt IV

591 g Polyesterdicarbonsäure 3 und 176,5 g Isophthalsäurediglycidylester (entsprechend einem Molverhältnis von 1 : 2) wurden unter $N_2$ während 2 Stunden bei 160 °C unter Rühren reagieren gelassen. Das erhaltene Addukt IV ist kristallin mit zwei Schmelzpeaks bei 84 und 99 °C und einem Epoxidäquivalentgewicht von 1 750.

Addukt V

197 g Polyesterdicarbonsäure 3 und 58 g Terephthalsäurediglycidylester (entsprechend einem Molverhältnis von 1 : 2) wurden unter $N_2$ während 3 Stunden bei 160 °C unter Rühren reagieren gelassen. Das erhaltene Addukt V ist kristallin mit zwei Schmelzpeaks bei 80 und 95 °C und einem Epoxidäquivalentgewicht von 1 960.

Addukt VI

197 g Polyesterdicarbonsäure 3 und 63,5 g Hexahydrophthalsäurediglycidylester (entsprechend einem Molverhältnis von 1 : 2) wurden unter $N_2$ während 3 Stunden bei 160 °C unter Rühren reagieren gelassen. Das erhaltene Addukt ist kristallin mit zwei Schmelzpeaks bei 85 und 100 °C und einem Epoxidäquivalentgewicht von 2 440.

Addukt VII

268 g Polyesterdicarbonsäure 4 mit einem Molekulargewicht von 5 356 und 74 g Bisphenol-A-diglycidyläther mit einem Epoxidgehalt von 5,4 Aequivalenten/kg (entsprechend einem Molverhältnis von 1 : 4) wurden unter Stickstoff-Atmosphäre während 2 Stunden bei 160 °C unter Rühren reagieren gelassen. Das erhaltene Addukt ist kristallin mit einem Schmelzpunkt von 43 °C einem Epoxidäquivalentgewicht von 1 220.

Addukt VIII

1 914 g Polyesterdicarbonsäure 4 und 592 g Bisphenol-A-diglycidyläther mit einem Epoxidgehalt von 5,41 Aequivalent en/kg (entsprechend einem Molverhältnis von 1 : 4) wurden unter Stickstoff während 3 Stunden bei 140 °C unter Rühren reagieren gelassen. Das erhaltene Addukt ist kristallin mit einem Schmelzpunkt von 42 °C und einem Epoxidäquivalentgewicht von 1 408.

Addukt IX

119 g Polyesterdicarbonsäure 5 und 134 g Isophthalsäurediglycidylester mit einem Epoxidgehalt von 6,7 Aequivalenten/kg (entsprechend einem Molverhältnis von 1 : 3) wurden unter Stickstoff während 2 Stunden bei 160 °C unter Rühren reagieren gelassen. Das erhaltene Addukt ist kristallin mit zwei Schmelzpeaks bei 55 und 72 °C und einem Epoxidäquivalentgewicht von 538.

Beispiel 1

100 g Terephthalsäurediglycidylester (Schmelzpunkt: 102 °C) mit einem Epoxidgehalt von 6,9 Aequivalenten/kg werden mit 4 g 1-Methylimidazol bei 110 °C gemischt und in eine auf 100 °C vorgewärmte Porzellanschale gegossen. Durch diese Mischung wird ein Nylon-Vlies (« Cerex 7506 » ; Gewicht 25 g/m²) der Firma Monsanto gezogen. Ueber der Schale befindet sich eine Verengung um überschüssiges Harz abzustreifen. Das impregnierte Vlies wird bei Raumtemperatur gelagert, wobei das Harz in kurzer Zeit auskristallisiert. Es wird ein lagerstabiler Klebefilm erhalten, an dem folgende Eigenschaften gemessen werden :

| | |
|---|---|
| Gelierzeit bei 100 °C | = 3 Minuten |
| Rollenschälfestigkeit nach BS*) DTD 5577 (Härtung : 20 Minuten bei 100 °C) | = 1,9 N/mm |

Beispiel 2

100 g Terephthalsäurediglycidylester entsprechend Beispiel 1 werden mit 4 g eines Härtungskatalysators folgender Konstitution

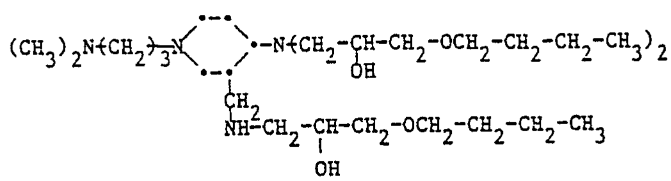

bei 100-110 °C gemischt und anschliessend auf ein Aluminium-Blech ausgegossen. Die Mischung kristallisiert rasch und lässt sich pulverisieren. Mit diesem Pulver wurden folgende Verklebungen und Messungen durchgeführt :

Zur Bestimmung der Torsionsklebefestigkeit werden gemäss Vorschrift für Messungen mit dem « Twist-o-Meter » (Firma Epprecht, Instruments + Controls, Bassersdorf, CH) Aluminiumzapfen verklet. Dazu wird das Pulver unter Rühren auf 120 °C erhitzt bis man eine viskose Lösung erhält. Mit der auf Raumtemperatur abgekühlte Lösung werden 5 Verklebungen hergestellt, die dann durch Erhitzen während 2 Stunden auf 140 °C gehärtet werden.

| | |
|---|---|
| Torsionklebefestigkeit (Twist-o-Meter) | = 65 N/mm² |
| Torsionsklebefestigkeit (Twist-o-Meter ; Verklebung mit einem 8 Monate bei Raumtemperatur gelagerten Pulver | = 79 N/mm² |
| Gelierzeit des Pulvers bei 130 °C nach 16 Monaten Lagerung bei Raumtemperatur | = 90 Sekunden |

Herstellung des oben eingesetzten Härtungskatalysators : 42,8 g (0,2 Mol) 1-Dimethylaminopropyl-3-aminomethyl-4-aminopiperidin werden im Sulfierkolben vorgelegt und unter Stickstoff-Atmosphäre auf 90 °C erwärmt. Innerhalb von 27 Minuten werden, ohne weitere Wärmezufuhr, unter Rühren 90,0 g (0, 6 Mol) Butylglycidyläther mit einem Epoxidgehalt von 6,67 Aequivalenten/kg, was einem Molverhältnis von 1 : 3 entspricht, zugetropft. Dabei steigt die Temperatur der Reaktionsmischung infolge exothermer Reaktion bis 155 °C. Das Reaktionsprodukt wird anschliessend noch 2 Stunden bei 140 °C gehalten. Nach dem Abkühlen erhält man eine mittelviskose, klare Flüssigkeit.

Elementaranalyse :

| Theorie | gefunden |
|---|---|
| C = 63,5 % | C = 62,2 % |
| H = 11,3 % | H = 11,6 % |
| N = 9,3 % | N = 9,6 % |
| O = 15,8 % | O = 16,3 % |

Beispiel 3

100 g Terephtalsäurediglycidylester entsprechend Beispiel 1, 25 g ABS-Pulver (« Novadur », Korngrösse 250 µm der Firma Bayer), 4 g 2-Aethyl-4-methylimidazol und 0,2 β-Kupferphthalocyanin werden bei 110 °C gemischt und entsprechend Beispiel 1 auf ein Polyester-Vlies (« Freudenberg » 85591) aufgezogen und kristallisieren lassen. Am Klebefilm werden folgende Eigenschaften gemessen :

*) = British Standard

| | |
|---|---|
| Gelierzeit bei 130 °C | = 2 Minuten |
| Rollenschälfestigkeit nach BS DTD 5577 (Härtung : 20 Minuten bei 120 °C) | = 4 N/mm |
| Zugscherfestigkeit nach DIN**) 53283 (Härtung : 20 Minuten bei 120 °C) | = 18 N/mm$^2$ |

Die Zugscherfestigkeit wurde an verklebten Aluminiumblechen (Antikorodal 100 B) mit 12 mm Ueberlappung gemessen. Zur Verklebung mit dem oben hergestellten Klebefilm wurde geschliffene, mit Aceton entfettete Aluminiumbleche verwendet.

## Vergleichsbeispiel

100 g eines bei Raumtemperatur flüssigen Bisphenol-A-diglycidyläthers mit einem Epoxidgehalt von 5,4 Aequivalenten/kg werden bei Raumtemperatur mit 2 g 2-Aethyl-4-methylimidazol gemischt. Daran werden folgende Eigenschaften gemessen :

| | |
|---|---|
| Gelierzeit bei 100 °C der frischen Mischung | = 18 Minuten |
| Gelierzeit bei 130 °C der frischen Mischung | = 4 Minuten |
| Gebrauchsdauer bei 23 °C | = maximal 24 Stunden |
| Gebrauchsdauer bei 40 °C | = maximal 8 Stunden |

## Beispiel 4

100 g Isophthalsäurediglycidylester (Schmelzpunkt = 67 °C) mit einem Epoxidgehalt von 6,8 Val/kg mit 4 g 1-Methylimidazol bei 70 °C kurz gemischt und in eine auf 60 °C vorgewärmte Porzellanschale gegossen. Durch diese Mischung wird ein Nylon-Vlies entsprechend Beispiel 1 gezogen und bei Raumtemperatur auskristallisieren lassen. Am lagerstabilen Klebefilm werden folgende Eigenschaften gemessen :

| | |
|---|---|
| Gelierzeit bei 100 °C | = 140 Sekunden |
| Rollenschälfestigkeit nach BS DTD 5577 (Härtung : 20 Minuten bei 100 °C) | = 1,3 N/mm |
| Torsionsklebefestigkeit (Twist-o-Meter ; Härtung : 2 Stunden bei 140 °C) | = 77 N/mm$^2$ |
| Torsionsklebefestigkeit (Twist-o-Meter ; Verklebung mit einem 8 Monate bei Raumtemperatur gelagerten Pulver ; Härtung wie oben) | = 88 N/mm$^2$ |

## Beispiel 5

80 g Isophthalsäurediglycidylester entsprechend Beispiel 2,30 g ABS-Pulver (« Novadur », Korngrösse 250 µm, der Firma Bayer) und 3,2 g 1-Methylimidazol werden bei 70 °C gut gemischt und entsprechend Beispiel 1 auf ein Nylon-Vlies aufgezogen. Am lagerstabilen Klebefilm werden folgende Eigenschaften gemessen :

| | |
|---|---|
| Gelierzeit bei 100 °C | = 120 Sekunden |
| Rollenschälfestigkeit nach BS DTD 5577 (Härtung : 20 Minuten bei 100 °C) | = 10 N/mm |
| Zugscherfestigkeit nach DIN 53282 (Härtung : 20 Minuten bei 100 °C) | = 21 N/mm$^2$ |
| Zugscherfestigkeit nach 10 Tagen Wasserlagerung bei 23 °C | = 20 N/mm$^2$ |
| Zugscherfestigkeit nach 30 Tagen Wasserlagerung bei 23 °C | = 19 N/mm$^2$ |

Der Zugscherversuch wurde an geschliffenen, mit Aceton entfetteten Aluminiumblechen mit 12 mm Ueberlappung gemessen.

## Beispiel 6

85 g Isophthalsäurediglycidylester entsprechend Beispiel 3, 15 g ABS-Pulver (« Novadur », Korngrösse 250 µm der Firma Bayer), und 3 g einer Verbindung mit folgender Konstitution

$(CH_3)_2—N—(CH_2)_3—NH—CH_2—CH—CH_2—O—(CH_2—)_3CH_3$

OH (an CH)

**) = Deutsche Industrie-Norm

werden bei 70 °C gemischt und entsprechend Beispiel 1 auf ein Nylon-Vlies aufgezogen. Am erhaltenen lagerstabilen Klebefilm werden folgende Eigenschaften gemessen :

| | |
|---|---|
| Gelierzeit bei 100 °C | = 15 Minuten |
| Gelierzeit bei 130 °C | = 8 Minuten |
| Gelierzeit bei 100 °C nach 30 Tagen Raumtemperaturlagerung | = 11 Minuten |
| Gelierzeit bei 130 °C nach 30 Tagen Raumtemperaturlagerung | = 1 Minute |
| Rollenschälfestigkeit nach BS DTD 5577 | |
| (Härtung : 20 Minuten bei 120 °C) | = 8 N/mm |
| Rollenschälfestigkeit nach 30 Tagen Raumtemperaturlagerung | = 11 N/mm |
| Zugscherfestigkeit nach DIN 53283 | |
| (Härtung : 20 Minuten bei 120 °C) | = 22 N/mm$^2$ |
| Zugscherfestigkeit nach 30 Tagen Raumtemperaturlagerung | = 26 N/mm$^2$ |

Beispiel 7

90 g Isophthalsäurediglycidylester entsprechend Beispiel 3, 10 g Aethylenacrylsäure-Copolymer-Pulver (« Lupulen » der Firma BASF) und 3,6 g 1-Methylimidazol werden bei 70 °C gemischt und entsprechend Biespiel 1 auf ein Nylon-Vlies aufgezogen und mit einer Polyäthylenfolie aufgewickelt. Der Klebefilm kristallisiert rasch und lässt sich gut von der Polyäthylenfolie trennen. An der Klebefolie wurden folgende Eigenschaften gemessen :

| | |
|---|---|
| Gelierzeit bei 130 °C | = 2 Minuten |
| Rollenschälfestigkeit nach BS DTD 5577 | |
| (Härtung : 20 Minuten bei 100 °C) | = 13 N/mm |

Beispiel 8

100 g Isophthalsäurediglycidylester entsprechend Beispiel 2, 25 g Aethylenacrylsäure-Copolymer-Pulver (« Lupulen » der Firma BASF), 4 g 1-Methylimidazol und 0,2 g β-Kupferphthalocyanin werden bei 80 °C gemischt und entsprechend Beispiel 1 auf ein Nylon-Vlies gezogen und kristallisieren lassen. Am lagerstabilen Klebefilm werden folgende Eigenschaften gemessen :

| | |
|---|---|
| Gelierzeit bei 130 °C | = 2 Minuten |
| Rollenschälfestigkeit nach BS DTD 5577 | |
| (Härtung : 20 Minuten bei 120 °C) | = 4 N/mm |
| Zugscherfestigkeit nach DIN 53283 | |
| (Härtung : 20 Minuten bei 120 °C) | = 7 N/mm$^2$ |

Beispiel 9

100 g eines Diglycidylesters der Formel

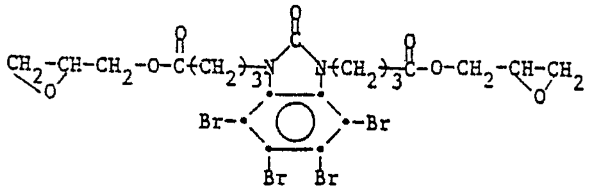

mit einem Epoxidgehalt von 2,5 Aequivalenten/kg und einem Schmelzpunkt von 90 °C werden bei 120 °C mit 25 g ABS-Pulver (Novadur ; Korngrösse 250 μm) und 4 g Vinylimidazol gemischt. Die Gelierzeit dieser Mischung beträgt bei 130 °C 25 Minuten. Mit dieser Mischung wird ein Glasgewebe impregniert welches in einer Carver-Presse während 30 Minuten bei 160 °C einem Druck von 18 kg/cm$^2$ zu einem Laminat verpresst wurde.

| | |
|---|---|
| Aspekt der Laminatplatte | = Hellbraun |
| Glasumwandlungstemperatur | = 92 °C |
| (Differential Scanning Calorimeter-1, 16 °C/min) | |
| Brennbarkeit nach Underwriters Laboratories 94 | |
| Brennzeit | = 0 Sekunden |
| Stufe | = 94 V-O |

## Beispiel 10

80 g Isophthalsäurediglycidylester und 20 g Addukt I werden bei 80 °C zusammengeschmolzen, 2 g 1-Methylimidazol zugegeben und entsprechend Beispiel 1 auf ein Nylon-Vlies aufgezogen. Die Harz-Katalysator-Mischung kristallisiert bei Raumtemperatur wachsartig aus. Am lagerstabilen Klebefilm werden folgende Eigenschaften gemessen.

| | |
|---|---|
| Gelierzeit bei 100 °C | = 20 Minuten |
| Gelierzeit bei 140 °C | = 5 Minuten |
| Zugscherfestigkeit nach DIN 53283 (Härtung 20 Minuten bei 120 °C) | = 7,4 N/mm$^2$ |

## Beispiel 11

50 g Isophthalsäurediglycidylester, 5 g Terephthalsäurediglycidylester und 40 g Addukt II werden auf 120 °C erwärmt, auf 90 °C abkühlen lassen, 5 g ABS-Pulver und 4 g eines Härtungskatalysators der Formel

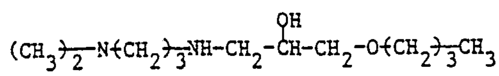

zugegeben und entsprechend Beispiel 1 auf ein Nylon-Vlies aufgezogen. Die Harz-Katalysator-Mischung kristallisiert bei Raumtemperatur innerhalb 9 Minuten.

| | |
|---|---|
| Gelierzeit bei 100 °C | = < 15 Minuten |
| Zugscherfestigkeit nach DIN 53238 (Hartung : 20 Minuten bei 120 °C) | = 8,3 N/mm$^2$ |
| Rollenschälfestigkeit nach BS DTD 5577 (Härtung : 20 Minuten bei 120 °C) | = 9,0 N/mm |

## Beispiel 12

70 g Isophthalsäurediglycidylester und 20 g Addukt II werden bei 80 °C zusammengeschmolzen, 10 g ABS-Pulver und 1 g Talk-Pulver zugemischt und 4 g eines Katalysators der Formel

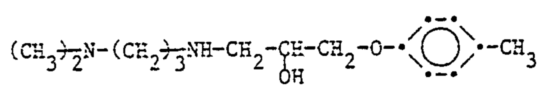

zugeben und entsprechend Beispiel 1 auf ein Nylon-Vlies aufgezogen. Die Harz-Katalysator-Mischung kristallisiert bei Raumtemperatur innerhalb von 12 Minuten.

| | |
|---|---|
| Gelierzeit bei 100 °C | = > 20 Minuten |
| Gelierzeit bei 140 °C | = 14 Minuten |
| Zugscherfestigkeit nach DIN 53283 (Härtung : 20 MInuten bei 120 °C) | = 25,0 N/mm$^2$ |
| Rollenschälfestigkeit nach BS DTD 5577 (Härtung : 20 Minuten bei 120 °C) | = 11,2 N/mm |

## Beispiel 13

50 g Terephthalsäurediglycidylester und 50 g Addukt III werden bei 120 °C gemischt, auf 100 °C abkühlen gelassen, 4 g des in Beispiel 6 verwendeten Katalysators zugegeben und entsprechend Beispiel 1 auf ein Nylon-Vlies aufgezogen. Die Rekristallisationszeit bei Raumtemperatur beträgt weniger als eine Minute.

| | |
|---|---|
| Gelierzeit bei 100 °C | = 15 Minuten |
| Zugscherfestigkeit nach DIN 53283 (Härtung : 20 Minuten bei 120 °C) | = 15,0 N/mm$^2$ |
| Rollenschälfestigkeit nach BS DTD 5577 (Härtung : 20 Minuten bei 120 °C) | = 11,0 N/mm |

Beispiel 14

80 g Terephthalsäurediglycidylester und 20 g Addukt III werden bei 120 °C gemischt, auf 100 °C abgekühlt, 2 g Katalysator entsprechend Beispiel 10 zugegeben und entsprechend Beispiel 1 auf ein Nylon-Vlies aufgezogen. Die Rekristallisationszeit bei Raumtemperatur beträgt weniger als 3 Minuten.

| | |
|---|---|
| Gelierzeit bei 100 °C | = 16 Minuten |
| Gelierzeit bei 140 °C | = 6 Minuten |
| Zugscherfestigkeit nach DIN 53283 (Härtung während 20 Minuten bei 120 °C) | = 22,1 N/mm$^2$ |

Beispiel 15

70 g Terephthalsäurediglycidylester und 20 g Addukt IV werden bei 120 °C gemischt, 10 g ABS-Pulver und 4 g des in Beispiel 6 eingesetzten Katalysators zugemischt und entsprechend Beispiel 1 auf ein Nylon-Vlies aufgezogen. Die Rekristallisationszeit beträgt weniger als 3 Minuten bei Raumtemperatur.

| | |
|---|---|
| Gelierzeit bei 100 °C | = 20 Minuten |
| Gelierzeit bei 140 °C | = 5 Minuten |
| Zugscherfestigkeit nach DIN 53283 (Härtung : 20 Minuten bei 120 °C) | = 23,8 N/mm$^2$ |
| Rollenschälfestigkeit nach BS DTD 5577 (Härtung : 20 Minuten bei 120 °C) | = 9,1 N/mm |

Beispiel 16

100 g Addukt V werden auf 120 °C erwärmt, 2 g des in Beispiel 6 verwendeten Katalysators zugegeben und entsprechend Beispiel 1 auf ein Nylon-Vlies aufgezogen. Die Rekristallisationszeit bei Raumtemperatur ist kleiner als 1 Minute.

| | |
|---|---|
| Gelierzeit bei 100 °C | =18 Minuten |
| Gelierzeit bei 140 °C | = 2 Minuten |
| Zugscherfestigkeit nach DIN 53283 (Härtung : 20 Minuten bei 120 °C) | = 6,5 N/mm$^2$ |

Beispiel 17

80 g Terephthalsäurediglycidylester und 20 g Addukt V werden bei 120 °C zusammengeschmolzen, 4 g des in Beispiel 6 verwendeten Katalysators zugemischt und entsprechend Beispiel 1 auf ein Nylon-Vlies aufgezogen. Die Rekristallisationszeit beträgt weniger als 1 Minute bei Raumtemperatur.

| | |
|---|---|
| Gelierzeit bei 100 °C | = 20 Minuten |
| Gelierzeit bei 140 °C | = 6 Minuten |
| Zugscherfestigkeit nach DIN 53283 (Härtung : 20 Minuten bei 120 °C) | = 26,4 N/mm$^2$ |
| Rollenschälfestigkeit nach BS DTD 5577 (Härtung : 20 Minuten bei 120 °C) | = 8,4 N/mm |

Beispiel 18

80 g Terephthalsäurediglycidylester und 20 g Addukt VI werden bei 120 °C zusammengemischt, 2 g 2-Aethyl-4-methylimidazol zugegeben und entsprechend Beispiel 1 auf ein Nylon-Vlies aufgezogen. Die Mischung rekristallisiert bei Raumtemperatur innerhalb 1 Minute.

| | |
|---|---|
| Gelierzeit bei 100 °C | = 5 Minuten |
| Gelierzeit bei 140 °C | = 1 1/2 Minuten |
| Zugscherfestigkeit nach DIN 53283 (Härtung : 20 Minuten bei 120 °C) | = 20,8 N/mm$^2$ |

Beispiel 19

100 g Terephthalsäurediglycidylester und 20 g Addukt VII werden auf 110 °C erwärmt, 3 g des Katalysators entsprechend Beispiel 12 zugegeben und entsprechend Beispiel 1 auf ein Nylon-Vlies aufgezogen. Die Harz-Katalysator-Mischung kristallisiert bei Raumtemperatur innerhalb 30 Sekunden. Es wird ein lagerstabiler Klebefilm erhalten, an dem folgende Eingenschaften gemessen werden :

| | |
|---|---|
| Gelierzeit bei 100 °C | = 67 Minuten |
| Gelierzeit bei 130 °C | = 47 Minuten |

Nach Härtung während 30 Minuten bei 140 °C werden folgende Eigenschaften gemessen :

| | |
|---|---|
| Zugscherfestigkeit nach DIN 53283 | = 23,0 N/mm² |
| Zugscherfestigkeit nach DIN 53283 nach 30 Tagen RT-Lagerung (RT = Rautemperatur) | = 29,6 N/mm² |
| Rollenschälfestigkeit nach BS DTD 5577 | = 9,1 N/mm |
| Rollenschälfestigkeit nach BS DTD 5577 nach 30 Tagen RT-Lagerung | = 12,4 N/mm |

Ein Teil der oben hergestellten härtbaren Harzmischung wird in Aluminiumformen (145 × 145 × 4 mm) gegossen und während 4 Stunden bei 100 °C und 12 Stunden bei 150 °C gehärtet. Die erhaltenen Formkörper weisen folgende Eigenschaften auf :

| | |
|---|---|
| Wärmeformbeständigkeit nach ISO***) R 75 | = 86 °C |
| Biegefestigkeit nach VSM****) 77103 | = 105 N/mm² |
| Durchbiegung nach VSM 77103 | = 7,2 mm |
| Schlagbiegefestigkeit nach VSM 77105 | = 11,5 N/mm |
| Wasseraufnahme bei 23 °C nach 24 Stunden | = 0,5 Gew.-% |
| Kochwasseraufnahme nach 24 Stunden | = 3,3 Gew.-% |

## Beispiel 20

100 g Isophthalsäurediglycidylester, 20 g Addukt III, 10 g ABS-Pulver (entsprechend Beispiel 5), 0,2 g 2-Kupferphthalocyanin und 3 g des im Beispiel 12 verwendeten Katalysators werden bei 80 °C gemischt und ein Teil davon entsprechend Beispiel 1 auf Nylon-Vlies aufgezogen. Die Rekristallisationszeit bei Raumtemperatur beträgt etwa 10 Minuten. Am lagerstabilen Klebefilm werden folgende Eigenschaften gemessen :

| | |
|---|---|
| Gelierzeit bei 100 °C | = 46 Minuten |
| Gelierzeit bei 130 °C | = 25 Minuten |
| Zugscherfestigkeit nach DIN 53282 (Härtung : 30 Minuten bei 140 °C) | = 24 N/mm² |
| Rollenschälfestigkeit nach BS DTD 5477 (Härtung : 30 Minuten bei 140 °C) | = 11 N/mm |

Der andere Teil der oben hergestellten härtbaren Mischung wird in vorgewärmte Aluminiumformen gegossen und während 4 Stunden bei 100 °C und 12 Stunden bei 160 °C gehärtet. An der gehärteten Formstoffplatte werden folgende Eigenschaften gemessen :

| | |
|---|---|
| Biegefestigkeit (VSM 77103) | = 104 N/mm² |
| Durchbiegung (VSM 77103) | = 5,9 mm |
| Schlagbiegefestigkeit (VSM 77105) | = 12 N/mm |
| Wärmeformbeständigkeit (ISO R 75) | = 78 °C |
| Wasseraufnahme nach 4 Tagen Wasserlagerung bei 23 °C | = 0,3 Gew.-% |

## Beispiel 21

100 g Terephthalsäurediglycidylester, 5 g Addukt VIII und 3 g des im Beispiel 12 verwendeten Katalysators werden bei 110 °C gemischt und ein Teil davon entsprechend Beispiel 1 auf Nylon-Vlies aufgezogen.

Die Rekristallisationszeit bei Rautemperatur beträgt weniger als 1 Minute. Am lagerstabilen Klebefilm werden folgende Eigenschaften gemessen :

| | |
|---|---|
| Gelierzeit bei 130 °C | = 80 Minuten |
| Zugscherfestigkeit (Härtung : 60 Minuten bei 140 °C) | = 2 26 N/mm² |
| Rollenschälfestigkeit (Härtung : 60 Minuten bei 140 °C) | = 9 N/mm |

***) ISO = International Standard Organisation Recommandation

***) VSM = Verein Schweizerischer Maschinenindustrieller.

| | |
|---|---|
| Nach 30 Tagen > 65 % RF*) (23 °C) | = 9 N/mm |
| Nach 60 Tagen > 65 % RF (23 °C) | = 6 N/mm |

Der andere Teil der oben hergestellten härtbaren Mischung wird in vorgewärmte Aluminiumformen gegossen und während 4 Stunden bei 100 °C und 12 Stunden bei 160 °C gehärtet. Die Formstoffe weisen folgende Eigenschaften auf :

| | |
|---|---|
| Biegefestigkeit (VSM 77103) | = 132 N/mm² |
| Durchbiegung (VSM 77103) | = 8,3 mm |
| Schlagbiegefestigkeit (VSM 77105) | = 20 N/mm |
| Formbeständigkeit (ISO R 75) | = 101 °C |
| Wasseraufnahme nach 4 Tagen Wasserlagerung bei 23 °C | = 0,48 Gew.-% |

Beispiel 22

100 g Terephthalsäurediglycidylester, 20 g Addukt VIII und 3 g des im Beispiel 12 eingesetzten Katalysators werden bei 110 °C gemischt und ein Teil davon entsprechend Beispiel 1 auf Nylon-Vlies aufgezogen. Die Rekristallisationszeit bei Raumtemperatur beträgt weniger als 1 Minute. Am lagerstabilen Klebefilm werden folgende Eigenschaften gemessen :

| | |
|---|---|
| Gelierzeit bei 100 °C | = 67 Minuten |
| Gelierzeit bei 130 °C | = 47 Minuten |
| Zugscherfestigkeit | = 23 N/mm² |
| (Härtung : 30 Minuten bei 140 °C) | |
| Nach 30 Tagen trockener RT-Lagerung | = 30 N/mm² |
| Nach 60 Tagen trockener RT-Lagerung | = 26 N/mm² |
| Nach 90 Tagen trockener RT-Lagerung | = 26 N/mm² |
| Rollenschälfestigkeit | = 9 N/mm |
| Nach 30 Tagen trockener RT-Lagerung | = 12 N/mm |
| Nach 60 Tagen trockener RT-Lagerung | = 11 N/mm |
| Nach 90 Tagen trockener RT-Lagerung | = 5 N/mm |

Der andere Teil der oben hergestellten härtbaren Mischung wird in vorgewärmte Aluminiumformen gegossen und während 4 Stunden bei 100 °C und 12 Stunden bei 160 °C gehärtet. Die Formstoffe weisen folgende Eigenschaften auf :

| | |
|---|---|
| Biegefestigkeit (VSM 77103) | = 105 N/mm² |
| Durchbiegung (VSM 77103) | = 7,2 mm |
| Schlagbiegefestigkeit (VSM 77105) | = 12 N/mm |
| Wärmeformbeständigkeit (ISO R 75) | = 86 °C |
| Wasseraufnahme nach 4 Tagen Wasserlagerung bei 23 °C | = 0,50 Gew.-% |

Beispiel 23

100 g Terephthalsäurediglycidylester, 25 g Addukt VIII und 3 g des im Beispiel 12 eingesetzten Katalysators werden bei 110 °C gemischt und ein Teil davon entsprechend Beispiel 1 auf ein Nylon-Vlies aufgezogen. Die Rekristallisationszeit bei Raumtemperatur beträgt weniger als 1 Minute. Am lagerstabilen Klebefilm werden folgende Eigenschaften gemessen :

| | |
|---|---|
| Gelierzeit bei 100 °C | = 22 Minuten |
| Gelierzeit bei 130 °C | = 22 Minuten |
| Zugscherfestigkeit | = 24 N/mm² |
| (Härtung : 30 Minuten bei 140 °C) | |
| Rollenschälfestigkeit | = 7 N/mm |
| (Härtung : 30 Minuten bei 140 °C) | |
| Nach 30 Tagen > 65 % RF*) bei 23 °C | = 8 N/mm |
| Nach 60 Tagen > 65 % RF bei 23 °C | = 7 N/mm |

Der andere Teil der oben hergestellten härtbaren Mischung wird in vorgewärmte Aluminiumformen gegossen und während 4 Stunden bei 100 °C und 12 Stunden bei 160 °C gehärtet. Die erhaltenen Formstoffe weisen folgende Eigenschaften auf :

*) RF = Raumfeuchtigkeit.

| | |
|---|---|
| Biegefestigkeit (VSM 77103) | = 102 N/mm$^2$ |
| Durchbiegung (VSM 77103) | = 10,8 mm |
| Schlagbiegefestigkeit (VSM 77105) | = 8 N/mm |
| Wärmeformbeständigkeit (ISO R 75) | = 54 °C |
| Wasseraufnahme nach 4 Tagen Wasserlagerung bei 23 °C | = 0,84 Gew.-% |

### Beispiel 24

100 g Terephthalsäurediglycidylester, 30 g Addukt VIII und 2 g eines Additionsproduktes aus 1 Mol 2-Methylimidazol und 1 Mol Kresylglycidyläther werden bei 110 °C gemischt und entsprechend Beispiel 1 auf ein Nylon-Vlies aufgezogen. Die Rekristallisationszeit bei Raumtemperatur beträgt weniger als 1 Minute. Am lagerstabilen Klebefilm werden folgende Eigenschaften gemessen :

| | |
|---|---|
| Gelierzeit bei 140 °C nach 12 Tagen RT-Lagerung | = 30 Minuten |
| Gelierzeit bei 180 °C nach 12 Tagen RT-Lagerung | = 8 Minuten |
| Torsionsklebefestigkeit nach 18 Tagen RT-Lagerungen (Härtung : 10 Minuten bei 180 °C) | = 5 N/mm$^2$ |
| Zugscherfestigkeit nach 30 Tagen RT-Lagerung (Härtung : 30 Minuten bei 200 °C) | = 25 N/mm$^2$ |

### Beispiel 25

100 g Terephthalsäurediglycidylester, 20 g Addukt VIII und 2 g eines Additionsproduktes aus 1 Mol 2-Aethyl-4-methylimidazol und 1 Mol Kresylglycidyläther werden bei 110 °C gemischt und entsprechend Beispiel 1 auf ein Nylon-Vlies aufgezogen. Die Rekristallisationszeit bei Rautemperatur beträgt weniger als 1 Minute. Am lagerstabilen Klebefilm werden folgende Eigenschaften gemessen :

| | |
|---|---|
| Gelierzeit bei 180 °C nach 26 Tagen RT-Lagerung | = 90 Sekunden |
| Torsionsklebefestigkeit nach 18 Tagen RT-Lagerung (Härtung : 10 Minuten bei 180 °C) | = 39 N/mm$^2$ |
| Torsionsklebefestigkeit nach 18 Tagen RT-Lagerung (Härtung 10 Minuten bei 200 °C) | = 51 N/mm$^2$ |
| Zugscherfestigkeit nach 30 Tagen RT-Lagerung (Härtung : 30 Minuten bei 200 °C) | = 20 N/mm$^2$ |

### Beispiel 26

100 g Terephthalsäurediglycidylester, 10 g Addukt VIII und 2 g eines Additionsproduktes aus 2 Mol Kresylglycidyläther und 1 Mol der Verbindung mit folgender Struktur :

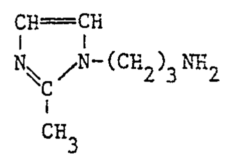

als Katalysator werden bei 110 °C gemischt.

Die Rekristallisationszeit bei Raumtemperatur beträgt weniger als 1 Minute. Am lagerstabilen Klebefilm werden folgende Eigenschaften gemessen :

| | |
|---|---|
| Gelierzeit bei 140 °C nach 26 Tagen RT-Lagerung | = 60 Minuten |
| Gelierzeit bei 180 °C nach 26 Tagen RT-Lagerung | = 17 Minuten |
| Zugscherfestigkeit nach 30 Tagen RT-Lagerung (Härtung : 30 Minuten bei 200 °C) | = 24 N/mm$^2$ |

### Beispiel 27

100 g Terephthalsäurediglycidylester, 20 g Addukt VIII und 4 g Piperazin werden bei 110 °C zusammengegeben, wobei die Temperatur des Reaktionsgemisches durch exotherme Wärmetönung auf 160 °C ansteigt. Die Rekristallisationszeit bei Rautemperatur beträgt 9 Minuten. Am Klebefilm werden folgende Eigenschaften gemessen :

| | |
|---|---|
| Gelierzeit bei 100 °C nach 35 Tagen RT-Lagerung | = 30 Minuten |
| Gelierzeit bei 140 °C nach 35 Tagen RT-Lagerung | = 12 Minuten |
| Zugscherfestigkeit nach 40 Tagen RT-Lagerung (Härtung : 30 Minuten bei 200 °C). | = 22 22 N/mm$^2$ |

Beispiel 28

100 g Terephthalsäurediglycidylester, 20 g Addukt IX und 3 g Dicyandiamid werden bei 110 °C zusammengegeben und entsprechend Beispiel 1 auf ein Faservlies aufgezogen. Die Rekristallisationszeit bei Raumtemperatur beträgt weniger als 1 Minute. Am lagerstabilen Klebefilm werden folgende Eigenschaften gemessen :

| | |
|---|---|
| Gelierzeit bei 140 °C nach 35 Tagen RT-Lagerung | = 28 Minuten |
| Gelierzeit bei 180 °C nach 35 Tagen RT-Lagerung | = 5 Minuten |
| Zugscherfestigkeit nach 40 Tagen RT-Lagerung | = 23 N/mm² |
| (Härtung : 30 Minuten bei 200 °C). | |

Beispiel 29

100 g Terephthalsäurediglycidylester, 3 g Aerosil (380 m²/g), 0,1 g Aethylenglykol und 4 g Dicyandiamid (feinst) werden bei 110 °C zusammengegeben, gemischt und gemäss Beispiel 1 auf ein Nylon-Vlies aufgezogen. Die Rekristallisationszeit bei Raumtemperatur beträgt weniger als 1 Minute. Am lagerstabilen Klebefilm werden folgende Eigenschaften gemessen :

| | |
|---|---|
| Gelierzeit bei 160 °C nach 23 Tagen RT-Lagerung | = 18 Minuten |
| Gelierzeit bei 180 °C nach 23 Tagen RT-Lagerung | = 4 Minuten |
| Torsionsklebefestigkeit nach 18 Tagen RT-Lagerung | = 14 N/mm² |
| (Härtung : 10 Minuten bei 200 °C) | |
| Zugscherfestigkeit nach 30 Tagen RT-Lagerung | = 18 N/mm² |
| (Härtung : 30 Minuten bei 200 °C) | |

Beispiel 30

100 g Isophthalsäurediglycidylester und 3 g des im Beispiel 12 eingesetzten Katalysators werden bei 80 °C gemischt und ein Teil davon entsprechend Beispiel 1 auf ein Nylon-Vlies aufgetragen. Die Rekristallisationszeit bei Raumtemperatur beträgt etwa 10 Minuten. Am lagerstabilen Klebefilm werden folgende Eigenschaften gemessen :

| | |
|---|---|
| Gelierzeit bei 100 °C | = 50 Minuten |
| Gelierzeit bei 130 °C | = 26 Minuten |
| Zugscherfestigkeit | = 24 N/mm² |
| (Härtung : 30 Minuten bei 140 °C) | |
| Zugscherfestigkeit nach 30 Tagen RT-Lagerung | = 25 N/mm² |
| Rollenschälfestigkeit | = 6 N/mm |
| (Härtung : 30 Minuten bei 140 °C) | |
| Rollenschälfestigkeit nach 30 Tagen RT-Lagerung | = 8 N/mm |

Ein anderer Teil der oben hergestellten härtbaren Mischung wird in vorgewärmte Aluminiumformen gegossen und während 4 Stunden bei 100 °C und 12 Stunden bei 160 °C gehärtet. Die erhaltenen Formstoffen weisen folgende Eigenschaften auf :

| | |
|---|---|
| Biegefestigkeit (VSM 77103) | = 166 N/mm² |
| Durchbiegung (VSM 77103) | = 7,2 mm |
| Schlagbiegefestigkeit (VSM 77105) | = 21 N/mm |
| Wärmeformbeständigkeit (ISO R 75) | = 109 °C |
| Wasseraufnahme nach 4 Tagen Wasserlagerung bei 23 °C | = 0,31 Gew.-% |

Beispiel 31

100 g Terephthalsäurediglycidylester, 20 g Addukt VIII und 2 g Piperazin werden bei 110 °C gemischt und ein Teil davon entsprechend Beispiel 1 auf ein Nylon-Vlies aufgetragen. Die Rekristallisarionszeit bei Raumtemperatur beträgt weniger als 1 Minute. Am lagerstabilen Klebefilm werden folgende Eigenschaften gemessen :

| | |
|---|---|
| Gelierzeit bei 140 °C nach 8 Tagen RT-Lagerung | = 140 Minuten |
| Gelierzeit bei 180 °C nach 8 Tagen RT-Lagerung | = 39 Minuten |
| Zugscherfestigkeit nach 15 Tagen RT-Lagerung | = 29 N/mm² |
| (Härtung : 30 Minuten bei 200 °C) | |

Beispiel 32

100 g Terephthalsäurediglycidylester, 10 g Addukt IX und 3 g des im Beispiel 26 verwendeten Katalysators werden bei 110 °C gemischt und entsprechend Beispiel 1 auf ein Nylon-Vlies aufgezogen. Die Rekristallisationszeit bei Raumtemperatur beträgt weniger als 1 Minute. Am lagerstabilen Klebefilm werden folgende Eigenschaften gemessen :

| | |
|---|---|
| Gelierzeit bei 140 °C nach 8 Tagen RT-Lagerung | = 40 Minuten |
| Gelierzeit bei 180 °C nach 8 Tagen RT-Lagerung | = 5 1/2 Minuten |
| Zugscherfestigkeit nach 15 Tagen RT-Lagerung | = 25 N/mm$^2$ |
| (Härtung : 30 Minuten bei 200 °C) | |

Beispiel 33

100 g Isophthalsäurediglycidylester, 10 g Addukt IX und 3 g des im Beispiel 12 verwendeten Katalysators werden bei 90 °C gemischt und ein Teil davon gemäss Beispiel 1 auf ein Nylon-Vlies aufgezogen. Die Rekristallisationszeit bei Raumtemperatur beträgt etwa 12 Stunden. Am Klebefilm werden folgende Eigenschaften gemessen :

| | |
|---|---|
| Gelierzeit bei 100 °C | = 45 Minuten |
| Gelierzeit bei 130 °C | = 17 Minuten |
| Zugscherfestigkeit | = 24 N/mm$^2$ |
| (Härtung : 30 Minuten bei 140 °C) | |
| Rollenschälfestigkeit | = 12 N/mm |
| (Härtung : 30 Minuten bei 140 °C) | |

Der andere Teil der härtbaren Mischung wird in vorgewärmte Aluminiumformen gegossen und während 4 Stunden bei 100 °C und 12 Stunden bei 160 °C gehärtet. Die erhaltenen Formstoffe weisen folgende Eigenschaften auf :

| | |
|---|---|
| Biegefestigkeit (VSM 77103) | = 159 N/mm$^2$ |
| Durchbiegung (VSM 77103) | = 8,2 mm |
| Schlagbiegefestigkeit (VSM 77105) | = 26 N/mm |
| Wärmeformbeständigkeit (ISO R 75) | = 91 °C |
| Wasseraufnahme nach 4 Tagen bei 23 °C | = 0,39 Gew.-% |

Beispiel 34

100 g Isophthalsäurediglycidylester, 20 g Addukt IX, 3 g des im Beispiel 12 verwendeten Katalysators und 2 g $\gamma$-Glycidyloxypropyltrimethoxisilan werden bei 90 °C gemischt und ein Teil davon entsprechend Beispiel 1 auf ein Nylon-Vlies aufgetragen. Am kristallinen Vlies werden folgende Eigenschaften gemessen :

| | |
|---|---|
| Rollenschälfestigkeit (BS DTD 5577) | = 11 N/mm |
| Rollenschälfestigkeit nach 7 Tagen Lagerung bei 23 °C und RF von > 65 %. | = 10 N/mm |

Der andere Teil der härtbaren Mischung wird in vorgewärmte Aluminiumformen gegossen und während 4 Stunden bei 100 °C und 12 Stunden bei 160 °C gehärtet. Die erhaltenen Formstoffe weisen folgende Eigenschaften auf :

| | |
|---|---|
| Biegefestigkeit (VSM 77103) | = 166 N/mm$^2$ |
| Durchbiegung (VSM 77103) | = 9,9 mm |
| Schlagbiegefestigkeit (VSM 77105) | = 22 N/mm |
| Wasseraufnahme nach 4 Tagen Wasserlagerung bei 23 °C | = 0,38 Gew.-% |

Beispiel 35

100 g Isophthalsäurediglycidylester, 20 g Addukt IX, 3 g des im Beispiel 12 verwendeten Katalysators und 2 g eines Additionsproduktes aus 1 Mol 2-Aethyl-4-methylimidazol und 1 Mol $\gamma$-Glycidyloxypropyltrimethoxisilan werden bei 90 °C gemischt und ein Teil davon entsprechend Beispiel 1 auf ein Nylon-Vlies aufgetragen. Am kristallinen Vlies werden folgende Eigenschaften gemessen :

| | |
|---|---|
| Rollenschälfestigkeit | = 12 N/mm |
| (Härtung : 30 Minuten bei 140 °C) | |

| | |
|---|---|
| Rollenschälfestigkeit nach 7 Tagen Lagerung bei 23 °C und RF von > 65 %. | = 11 N/mm |

Der andere Teil der härtbaren Mischung wird in vorgewärmte Aluminiumformen gegossen und während 4 Stunden bei 100 °C und 12 Stunden bei 160 °C gehärtet. Die erhaltenen Formstoffe weisen folgende Eigenschaften auf :

| | |
|---|---|
| Biegefestigkeit (VSM 77103) | = 171 N/mm$^2$ |
| Durchbiegung (VSM 77103) | = 7,8 mm |
| Schlagbiegefestigkeit (VSM 77105) | = 11 N/mm |
| Wasseraufnahme nach 4 Tagen Wasserlagerung bei 23 °C | = 0,37 Gew.-% |

Beispiel 36

100 g Isophthalsäurediglycidylester, 20 g Polyesterdicarbonsäure 4 als Flexibilisator und 3 g eines Additionsproduktes aus 1 Mol 2-Methylimidazol und 1 Mol Butylglycidyläther werden bei 70 °C gemischt und entsprechend Beispiel 1 auf ein Nylon-Vlies aufgetragen. Die Rekristallisationszeit bei Raumtemperatur beträgt auf dem Vlies weniger als 1 Minute und als Masse etwa 10 Minuten.

Am lagerstabilen Klebefilm werden folgende Eigenschaften gemessen :

| | |
|---|---|
| Gelierzeit bei 140 °C | = 60 Minuten |
| Gelierzeit bei 180 °C | = 8 Minuten |
| Torsionsklebefestigkeit (Härtung : 30 Minuten bei 160 °C) | = 77 N/mm$^2$ |

**Ansprüche**

1. Lagerstabiles, in der Wärme in vernetzte Epoxidharze überführbares Einkomponentensystem bestehend aus festen Epoxidharzen und Härtungskatalysatoren sowie gegebenenfalls bis zu 30 Gewichts-%, bezogen auf das Epoxidharz-Härtungskatalysator-Gemisch, aus Thermoplasten in Pulverform, dadurch gekennzeichnet, dass es als festes Epoxidharz ein kristallines Epoxidharz mit durchschnittlich mehr als einer Epoxidgruppe im Molekül und einem Schmelzpunkt zwischen 40 bis 150 °C enthält.

2. Einkomponentensystem gemäss Anspruch 1, dadurch gekennzeichnet, dass es ein kristallines Epoxidharz mit einem Schmelzpunkt zwischen 60 und 100 °C enthält.

3. Einkomponentensystem gemäss Anspruch 1, dadurch gekennzeichnet, dass es als kristallines Epoxidharz Isophthalsäure und/oder Terephthalsäurediglycidylester enthält.

4. Einkomponentensystem gemäss Anspruch 3, dadurch gekennzeichnet, dass es zusätzlich ein kristallines epoxidgruppenhaltiges Addukt aus einem sauren aliphatischen Polyester und einem Epoxidharz enthält.

5. Einkomponentensystem gemäss Anspruch 1, dadurch gekennzeichnet, dass der Anteil des Härtungskatalysators 1 bis 12 Gewichts-%, vorzugsweise 2 bis 8 Gewichts-%, bezogen auf das Epoxidharz, enthält.

6. Einkomponentensystem gemäss Anspruch 1, dadurch gekennzeichnet, dass es den Härtungskatalysator im kristallinen Epoxidharz enthält und das erhalten wird, indem man ein kristallines Epoxidharz in der Schmelze mit dem Härtungskatalysator mischt und die Schmelze anschliessend auf Raumtemperatur abkühlt.

7. Einkomponentensystem gemäss Anspruch 1, dadurch gekennzeichnet, dass es einen Thermoplasten in Anteilen von 5 bis 20 Gewichts-% enthält.

8. Verwendung des Einkomponensystems gemäss Anspruch 1 zum Verkleben von metallischen und nichtmetallischen Gegenständen.

**Claims**

1. A one-component system which consists of solid epoxide resins, curing catalysts and also, if desired, up to 30 % by weight, relative to the epoxide resin/curing catalyst mixture, of thermoplasts in powder form, and which is stable on storage and can be converted to crosslinked epoxide resins on heating, which system contains, as the solid epoxide resin, a crystalline epoxide resin with, on average, more than one epoxide group in the molecule and a melting point of between 40 an 150 °C.

2. A one-component system according to claim 1, which contains a crystalline epoxide resin with a melting point between 60 and 100 °C.

3. A one-component system according to claim 1, which contains diglycidyl isophthalate and/or diglycidyl terephthalate as the crystalline epoxide resin.

4. A one-component system according to claim 3, which additionally contains a crystalline epoxide

group-containing adduct of an acid aliphatic polyester and an epoxide resin.

5. A one-component system according to claim 1, wherein the proportion of curing catalyst is 1 to 12 and preferably 2 to 8 % by weight, relative to the epoxide resin.

6. A one-component system according to claim 1, which contains the curing catalyst in the crystalline epoxide resin and which is obtained by mixing a crystalline epoxide resin in the melt with the curing catalyst and then cooling the melt to room temperature.

7. A one-component system according to claim 1, which contains a thermoplast in amounts of 5 to 20 % by weight.

8. The use of a one-component system according to claim 1 for producing an adhesive bond on metallic and non-metallic articles.

**Revendications**

1. Système à une seule composante, stable au stockage et transformable à chaud en résines époxydiques réticulées, constitué de résines époxydiques solides et de catalyseurs de durcissement ainsi que, le cas échéant, d'au plus 30 % en poids, par rapport au mélange résine époxydique/catalyseur de durcissement, de matières thermoplastiques à l'état pulvérulent, système caractérisé en ce qu'il contient, comme résine époxydique solide, une résine époxydique cristallisée renfermant en moyenne plus d'un radical époxy dans sa molécule et fondant entre 40 et 150 °C.

2. Système à une seule composante selon la revendication 1, caractérisé en ce qu'il contient une résine époxydique cristallisée qui a un point de fusion compris entre 60 et 100 °C.

3. Système à une seule composante selon la revendication 1, caractérisé en ce qu'il contient, comme résine époxydique cristallisée, de l'isophtalate et/ou du téréphtalate de diglycidyle.

4. Système à une seule composante selon la revendication 3, caractérisé en ce qu'il contient en outre un produit d'addition porteur de radicaux époxy cristallisé, dérivant d'un polyester aliphatique acide et d'une résine époxydique.

5. Système à une seule composante selon la revendication 1, caractérisé en ce que sa teneur en catalyseur de durcissement est comprise entre 1 et 12 % en poids, de préférence entre 2 et 8 % en poids, par rapport à la résine époxydique.

6. Système à une seule composante selon la revendication 1, caractérisé en ce qu'il contient le catalyseur de durcissement dans la résine époxydique cristallisée et en ce qu'on l'a préparé en mélangeant une résine époxydique cristallisée, à l'état fondu, avec le catalyseur de durcissement, puis en refroidissant la masse fondue jusqu'à la température ambiante.

7. Système à une seule composante selon la revendication 1, caractérisé en ce qu'il contient des matières thermoplastiques en des proportions de 5 à 20 % en poids.

8. Application du système à une seule composante selon la revendication 1 au collage d'objets métalliques et non métalliques.